# EUROPEAN PATENT SPECIFICATION

(11) **EP 3 521 158 B1**
(45) Date of publication and mention of the grant of the patent: **27.10.2021**
(21) Application number: 17856285.6
(22) Date of filing: 28.09.2017
(51) Int. Cl.: B64C 13/18, B64C 27/08, B64C 39/02, G01S 19/48, G05D 1/10, G05D 1/02

(54) **FLIGHT CONTROL DEVICE, UNMANNED AERIAL VEHICLE, FLIGHT CONTROL METHOD, AND COMPUTER PROGRAM**
FLUGSTEUERUNGSVORRICHTUNG, UNBEMANNTES LUFTFAHRZEUG, FLUGSTEUERUNGSVERFAHREN UND COMPUTERPROGRAMM
DISPOSITIF DE COMMANDE DE VOL, VÉHICULE AÉRIEN SANS PILOTE, PROCÉDÉ DE COMMANDE DE VOL, ET PROGRAMME D'ORDINATEUR

(30) Priority: 30.09.2016 JP 2016195106
(43) Date of publication of application: 07.08.2019
(73) Proprietor: NEC Corporation, Tokyo 108-8001 (JP)
(72) Inventor: ISHIKAWA, Hajime, Tokyo 108-8001 (JP); OOMINATO, Shinji, Tokyo 108-8001 (JP)
(74) Representative: Betten & Resch
(86) International application number: PCT/JP2017/035087
(87) International publication number: WO 2018/062336

(56) References cited:
- WO-A1-2013/055265
- JP-A- 2005 247 008
- JP-A- 2006 176 073
- JP-A- 2007 253 946
- JP-A- 2014 113 864
- US-A1- 2014 303 814
- US-A1- 2015 379 408
- US-A1- 2016 253 907
- RUBIO J C ET AL: "The trans-pacific crossing: long range adaptive path planning for UAVs through variable wind fields", 22ND. DASC. THE 22ND. DIGITAL AVIONICS SYSTEMS CONFERENCE PROCEEDINGS. INDIANAPOLIS, IN, OCT. 12 - 16, 2003; [DIGITAL AVIONICS SYSTEMS CONFERENCE], NEW YORK, NY : IEEE, US, 12 October 2003 (2003-10-12), pages 8.B.4-81, XP031961930, DOI: 10.1109/DASC.2003.1245898 ISBN: 978-0-7803-7844-5

## Description

### TECHNICAL FIELD

The present invention relates to a flight control device that controls flight of an unmanned aerial vehicle, an unmanned aerial vehicle provided with the flight control device, a flight control method, and a computer-readable recording medium having a recorded program whereby these are realized.

### BACKGROUND ART

Conventionally, an unmanned aerial vehicle (UAV: Unmanned Aerial Vehicle) called a 'drone' is used for spraying agricultural chemicals in a farm field having a large area. In recent years, compact unmanned aerial vehicles that use an electric motor as a power source have been developed due to reduced size and increased output of batteries. In particular, from the viewpoints of maneuverability and stability, many compact UAVs are multicopter-type UAVs provided with a plurality of rotors.

In a case of autonomously flying a UAV, it is necessary to avoid a collision between the UAV and an obstacle such as a tower or a power transmission line. Therefore, Patent Document 1 proposes technology in which, by inputting the coordinates of an obstacle together with a flight route into the UAV in advance, the UAV is automatically caused to avoid the obstacle when the UAV moves too close to the obstacle.

Furthermore, in recent years, UAVs that perform work such as spraying agricultural chemicals in a farm field have been developed. Also, UAVs having an imaging function are performing work in which a UAV shoots an image of a crop being cultivated in a farm field, and a farmer uses the shot image to become aware of the growing state of the crop and signs of a pest outbreak.

### LIST OF PRIOR ART DOCUMENTS

### PATENT DOCUMENT

Patent Document 1: JP 2003-127994 A
Patent Document 2: WO 2013/055265 A1
Patent Document 3: US 2016/253907 A1
Patent Document 4: US 2015/379408 A1

### DISCLOSURE OF THE INVENTION

### PROBLEMS TO BE SOLVED BY THE INVENTION

In a case where it is desired to use a UAV to shoot an image of a crop being cultivated in a farm field, and thereby become aware of the growing state of the crop and signs of a pest outbreak, it may be required to fly through the air over a predetermined point, and shoot an image of the crop being cultivated at the identified point. That is, it may be required to fly through the air over a predetermined point regardless of the environment of the farm field.

However, due to a change in the environment of the farm field caused by wind gusts or the like, there may be cases where the UAV deviates from a predetermined flight route, or is unable to fly. In such a case, it may not be possible for work such as spraying agricultural chemicals to be completed by the UAV, thus delaying agricultural work.

An example object of the present invention is to provide a flight control device, an unmanned aerial vehicle, a flight control method, and a computer-readable recording medium that are capable of controlling flight of the unmanned aerial vehicle according to changes in the environment of a farm field.

### MEANS FOR SOLVING THE PROBLEMS

In order to attain the above object, a flight control device is provided according to claim 1.

Also, in order to attain the above object, an unmanned aerial vehicle is provided according to claim 8.

Also, in order to attain the above object, a flight control method is provided according to claim 4.

Furthermore, in order to attain the above object, a computer program is provided according to claim 7.

### ADVANTAGEOUS EFFECTS OF THE INVENTION

As described above, according to the present invention, it is possible to control flight of an unmanned aerial vehicle according to changes in the environment of a farm field.

### BRIEF DESCRIPTION OF THE DRAWINGS

[Figure 1] FIG. 1 is a configuration diagram showing a schematic configuration of a flight control device according to an embodiment of the present invention.
[Figure 2] FIG. 2 is a block diagram that specifically shows the configuration of a flight control device according to an embodiment of the present invention.
[Figure 3] FIG. 3 is a diagram showing an example of a coordinate system used when calculating a propulsion speed and a propulsion direction.
[Figure 4] FIG. 4 is a diagram for illustrating an example of calculating the propulsion speed and the propulsion direction.
[Figure 5] FIG. 5 is a diagram for illustrating another example of calculating the propulsion speed and the propulsion direction.
[Figure 6] FIG. 6 is a diagram for illustrating an example of calculating the propulsion speed and the propulsion direction when causing an unmanned aerial vehicle to hover.
[Figure 7] FIG. 7 is a diagram for illustrating another example of calculating the propulsion speed and the propulsion direction when causing an unmanned aerial vehicle to hover.
[Figure 8] FIG. 8 is a flowchart showing operation of a flight control device according to an embodiment of the present invention.
[Figure 9] FIG. 9 is a diagram for illustrating another usage example of a flight control device.
[Figure 10] FIG. 10 is a block diagram showing an example of a computer that realizes a flight control device according to an embodiment of the present invention.

### MODE FOR CARRYING OUT THE INVENTION

### (Embodiment)

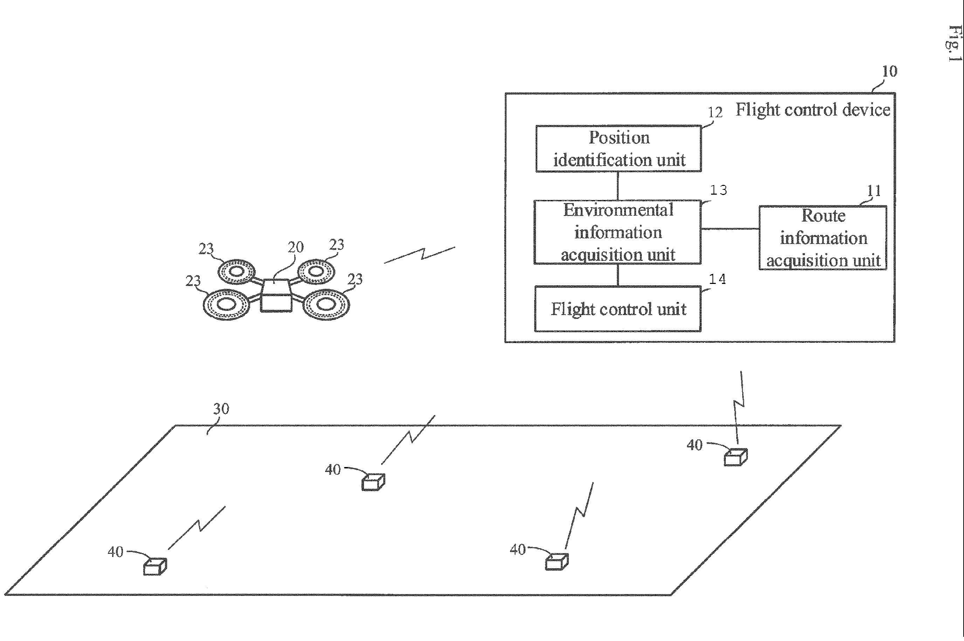

Following is a description of a flight control device, an unmanned aerial vehicle, a flight control method, and a program according to an embodiment of the present invention, with reference to FIGS. 1 to 10.

### [Device Configuration]

First, the configuration of the flight control device according to the present embodiment will be described. FIG. 1 is a configuration diagram showing a schematic configuration of the flight control device according to an embodiment of the present invention.

As shown in FIG. 1, a flight control device 10 according to the present embodiment is a device for controlling an unmanned aerial vehicle 20. The unmanned aerial vehicle 20 is used in a farm field 30 to perform work such as, for example, spraying of agricultural chemicals, shooting farm field images, or shooting images of a crop being cultivated in the farm field.

The flight control device 10 includes a route information acquisition unit 11, a position identification unit 12, an environmental information acquisition unit 13, and a flight control unit 14. A detection device 40 is installed in the farm field 30. The detection device 40 detects information related to the environment of the farm field 30 (referred to below as "environmental information"), and transmits the detected environmental information to the flight control device 10. The detection device 40 may include, for example, a wind direction/wind force sensor and a rainfall sensor. Also note that the detection device 40 may include a plurality of sensors, or may include only one sensor. For example, the detection device 40 may include only one of the wind direction/wind force sensor and the rainfall sensor, or the detection device 40 may include both of them. A plurality of the detection devices 40 may be installed in the farm field 30. Also note that in the present embodiment, the flight control device 10 can wirelessly communicate with the unmanned aerial vehicle 20 and the detection device 40, for example, by using a communications standard (such as Wi-Fi) used in a wireless LAN.

The route information acquisition unit 11 acquires route information related to an unmanned aerial vehicle route that has been set in advance. The route information, for example, is input to the route information acquisition unit 11 by a manager of the unmanned aerial vehicle 20 through an unshown user interface. The route information includes a flight route and a flight speed of the unmanned aerial vehicle 20, for example.

The position identification unit 12 acquires positional information for identifying the position of the unmanned aerial vehicle 20, and identifies the position of the unmanned aerial vehicle 20 based on the acquired positional information. Although described in detail later, the position identification unit 12 can acquire the positional information from the unmanned aerial vehicle 20 and the detection device 40, for example.

The environmental information acquisition unit 13 acquires environmental information of the farm field 30 from the detection device 40. Examples of the environmental information include wind speed, wind direction, rainfall, and the like.

The flight control unit 14 controls flight of the unmanned aerial vehicle 20 based on the route information acquired by the route information acquisition unit 11, the position of the unmanned aerial vehicle 20 identified by the position identification unit 12, and the environmental information acquired by the environmental information acquisition unit 13.

In this way, in the present embodiment, the flight control unit 14 controls flight of the unmanned aerial vehicle 20 in consideration of the environmental information of the farm field 30 acquired by the environmental information acquisition unit 13. In this case, even if the environment of the farm field 30 has changed, flight of the unmanned aerial vehicle 20 can be controlled according to that environmental change. Therefore, it is possible to prevent the unmanned aerial vehicle 20 from deviating from a predetermined flight route or becoming impossible to fly.

Note that conventionally, it was necessary for a manager of an unmanned aerial vehicle to examine the farm field environment each time work was to be performed, and then set the flight route of the unmanned aerial vehicle after deciding the work that could be executed by the unmanned aerial vehicle, locations where the unmanned aerial vehicle could perform work, and the like. This was a heavy burden for the manager of the unmanned aerial vehicle. Furthermore, it was necessary for the manager of the unmanned aerial vehicle to become deeply familiar with both the content of agricultural work and the abilities of the unmanned aerial vehicle.

However, it was not easy to secure such a manager for each farm field. On the other hand, in the present embodiment, the flight control unit 14 controls flight of the unmanned aerial vehicle 20 in consideration of the environmental information of the farm field 30 acquired by the environmental information acquisition unit 13. Therefore, it is possible to prevent the unmanned aerial vehicle 20 from deviating from a predetermined flight route or becoming impossible to fly. Accordingly, the manager of the unmanned aerial vehicle 20 can set the flight route or the like of the unmanned aerial vehicle 20 without examining the environment of the farm field 30 each time work is to be performed. Therefore, the burden on the manager of the unmanned aerial vehicle 20 is reduced. Also, even a person who is not deeply familiar with both the content of agricultural work and the abilities of the unmanned aerial vehicle 20 is capable of managing the unmanned aerial vehicle 20.

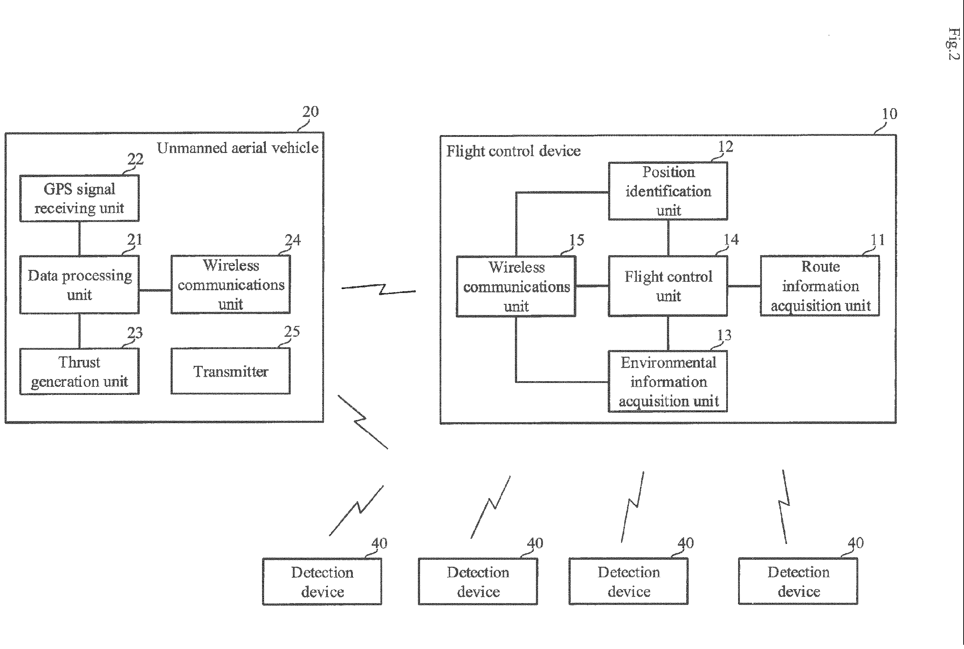

Next, the configuration of the flight control device 10 in the present embodiment will be described more specifically with reference to FIGS. 2 to 10, in addition to FIG. 1. FIG. 2 is a block diagram that specifically shows the configuration of a flight control device according to an embodiment of the present invention. Also, FIG. 2 shows the configuration of an unmanned aerial vehicle to be controlled.

First, as shown in FIG. 1, in the present embodiment, the unmanned aerial vehicle 20 to be controlled is a multicopter-type vehicle having a plurality of rotors, and is a so-called drone. As shown in FIG. 2, the unmanned aerial vehicle 20 includes a data processing unit 21, a GPS signal receiving unit 22, a thrust generation unit 23, a wireless communications unit 24, and a transmitter 25. Note that in the present embodiment, the unmanned aerial vehicle 20 is not limited to a multicopter-type vehicle. It is sufficient that the unmanned aerial vehicle 20 is in a form capable of hovering.

In the unmanned aerial vehicle 20, in the example of FIG. 1, four of the thrust generation units 23 are provided and each of these is provided with a rotor that generates thrust and an electric motor that is a drive source of the rotor. Note that in order to avoid complication of the drawing, in FIG. 2, only one thrust generation unit 23 is shown. The wireless communications unit 24 executes wireless data communications between the unmanned aerial vehicle 20 and the flight control device 10. The transmitter 25 transmits radio waves for identifying the position of the unmanned aerial vehicle 20.

The GPS signal receiving unit 22 receives a GPS (Global Positioning System) signal from a satellite and transmits the received GPS signal to the data processing unit 21.

The data processing unit 21, based on the GPS signal transmitted from the GPS signal receiving unit 22, calculates the current position and altitude of the unmanned aerial vehicle 20, and transmits the calculated position and altitude as positional information to the flight control device 10 through the wireless communications unit 24. Also, the data processing unit 21 adjusts the thrust of each thrust generation unit 23 based on the flight control information received from the flight control device 10 through the wireless communications unit 24. As a result, as described later, the propulsion speed and the propulsion direction of the unmanned aerial vehicle 20 are controlled.

In the present embodiment, radio waves that have been transmitted from the transmitter 25 of the unmanned aerial vehicle 20 are received by the plurality of detection devices 40. When the transmitter 25 enters a reception area, the detection devices 40 transmit information that identifies the strength of the received radio waves to the flight control device 10 as positional information. Also, in the present embodiment, the detection devices 40 detect wind speed and wind direction as the environmental information of the farm field 30, and transmit the detected wind speed and wind direction to the flight control device 10. Note that in the present embodiment, each detection device 40 is provided with a receiver that receives the radio waves transmitted from the transmitter 25 and a sensor that detects the environmental information of the farm field 30, but the receiver and the sensor may also be provided in different detection devices 40. That is, a detection device 40 that transmits positional information to the flight control device 10 and a detection device 40 that transmits environmental information to the flight control device 10 may be separately provided.

As shown in FIG. 2, in the present embodiment, the flight control device 10 is installed outside the unmanned aerial vehicle 20. In the present embodiment, the flight control device 10 includes a wireless communications unit 15 in addition to the route information acquisition unit 11, the position identification unit 12, the environmental information acquisition unit 13, and the flight control unit 14 described above. The wireless communications unit 15 executes wireless data communications between the unmanned aerial vehicle 20 and the plurality of detection devices 40.

In the present embodiment, the position identification unit 12, through the wireless communications unit 15, acquires respective positional information from the unmanned aerial vehicle 20 and the plurality of detection devices 40. The position identification unit 12 identifies the position of the unmanned aerial vehicle 20 based on one of the positional information acquired from the unmanned aerial vehicle 20, and the positional information acquired from the plurality of detection devices 40.

Specifically, for example, in the unmanned aerial vehicle 20, in a case where the GPS signal receiving unit 22 is receiving a GPS signal with a reception strength that is at least a threshold value that has been set in advance, the position identification unit 12 can identify the position of the unmanned aerial vehicle 20 based on the positional information acquired from the unmanned aerial vehicle 20. On the other hand, in a case where the GPS signal receiving unit 22 is receiving a GPS signal with a reception strength that is less than the threshold value that has been set in advance, for example, the position identification unit 12 can identify the position of the unmanned aerial vehicle 20 based on the positional information acquired from the plurality of detection devices 40. In this case, the position identification unit 12, based on the data from each detection device 40, identifies the strength of the radio waves received by each detection device 40, and further, based on the identified strength, calculates the distance between each detection device 40 and the unmanned aerial vehicle 20 (the transmitter 25). Then, the position identification unit 12 identifies the position of the unmanned aerial vehicle 20 using the position of each detection device 40 that has been identified in advance, and the distance from each detection device 40 to the unmanned aerial vehicle 20.

By identifying the position of the unmanned aerial vehicle 20 in this way, even in an environment where the unmanned aerial vehicle 20 cannot appropriately receive the GPS signal, for example such as near a mountain or under a thick cloud, the flight control device 10 can appropriately know the position of the vehicle 20. Also, in a case where the position of the unmanned aerial vehicle 20 is identified based on the positional information acquired from the plurality of detection devices 40, the altitude of the unmanned aerial vehicle 20 from the surface of the earth can be more accurately measured compared to a case where the position of the unmanned aerial vehicle 20 is identified based on a GPS signal. Therefore, it is possible to maintain the altitude of the unmanned aerial vehicle 20 at an appropriate position.

Also, in a case where the reception strength of the GPS signal is less than the threshold value that has been set in advance, the position identification unit 12 can also identify the position of the unmanned aerial vehicle 20 by the following processing. For example, assume that each detection device 40 outputs a unique beacon signal, and the unmanned aerial vehicle 20 is outputting a response signal in response to the beacon signal. In this case, each detection device 40 detects a time period (response delay) from output of the beacon signal to reception of the response signal that was output from the unmanned aerial vehicle 20, and from the detected response delay, the distance from the detection device 40 itself to the unmanned aerial vehicle 20 can be calculated. Then, each detection device 40 transmits the distance to the unmanned aerial vehicle 20 that was calculated to the flight control device 10 as positional information. Afterward, similar to the example described above, the position identification unit 12 identifies the position of the unmanned aerial vehicle 20 using the position of each detection device 40 that has been identified in advance, and the distance from each detection device 40 to the unmanned aerial vehicle 20 (positional information). Note that each detection device 40 may also transmit the detected response delay to the flight control device 10 as positional information. In this case, a mode may be adopted in which the position identification unit 12 calculates the distance between each detection device 40 and the unmanned aerial vehicle 20 based on the response delay detected by each detection device 40, and identifies the position of the unmanned aerial vehicle 20 based on the calculated distance.

Also, assume that the unmanned aerial vehicle 20 outputs a beacon signal, and each detection device 40 is outputting a unique response signal in response to the beacon signal. In this case, the unmanned aerial vehicle 20 detects respective time periods (response delays) from output of the beacon signal to reception of the response signal that was output from each detection device 40, and from the detected response delay, the distance from the unmanned aerial vehicle 20 itself to each detection device 40 can be calculated. Then, the unmanned aerial vehicle 20 transmits the distance to each detection device 40 that was calculated to the flight control device 10 as positional information. Afterward, in this case as well, the position identification unit 12 identifies the position of the unmanned aerial vehicle 20 using the position of each detection device 40 that has been identified in advance, and the distance from each detection device 40 to the unmanned aerial vehicle 20 (positional information). Note that in this case as well, the unmanned aerial vehicle 20 may also transmit each of the detected response delays to the flight control device 10 as positional information. In this case, a mode may be adopted in which the position identification unit 12 calculates the distance between each detection device 40 and the unmanned aerial vehicle 20 based on each of the response delays detected by the unmanned aerial vehicle 20, and identifies the position of the unmanned aerial vehicle 20 based on the calculated distance.

Note that the position identification unit 12 may also, for example, identify the position of the unmanned aerial vehicle 20 based on positional information acquired from a plurality of detection devices 40 in an area that has been set in advance (for example, an area where it is expected to be difficult for the unmanned aerial vehicle 20 to receive a GPS signal).

The flight control unit 14 calculates the wind speed and the wind direction at the position of the unmanned aerial vehicle 20 identified by the position identification unit 12 based on the positions of the plurality of detection devices 40 identified in advance and the wind speeds and the wind directions detected by the plurality of detection devices 40. Below, the position of the unmanned aerial vehicle 20 identified by the position identification unit 12 is referred to as the identification position of the unmanned aerial vehicle 20. In the present embodiment, the flight control unit 14, for example, calculates the wind speed and the wind direction at the identification position of the unmanned aerial vehicle 20 based on the distance between each detection device 40 that detected a wind speed and a wind direction, the wind speeds and the wind directions detected by the detection devices 40, and also the distance between the identification position of the unmanned aerial vehicle 20 and each detection device 40 (for example, the distance in the horizontal direction).

Also, the flight control unit 14 calculates the propulsion speed and the propulsion direction of the unmanned aerial vehicle 20 based on the wind speed and the wind direction at the identification position of the unmanned aerial vehicle 20 calculated, and also the flight route and the flight speed of the unmanned aerial vehicle 20 acquired by the route information acquisition unit 11. Further, the flight control unit 14 generates flight control information for flying the unmanned aerial vehicle 20 with the propulsion speed and the propulsion direction calculated. The flight control unit 14 transmits the generated flight control information to the unmanned aerial vehicle 20 through the wireless communications unit 15. Note that the propulsion speed and the propulsion direction are a speed and a direction that cancel the effects of wind, and allow the unmanned aerial vehicle 20 to be flown with the flight route and the flight speed acquired by the route information acquisition unit 11. Following is a brief description of an example calculation of the propulsion direction and the propulsion speed in the flight control unit 14.

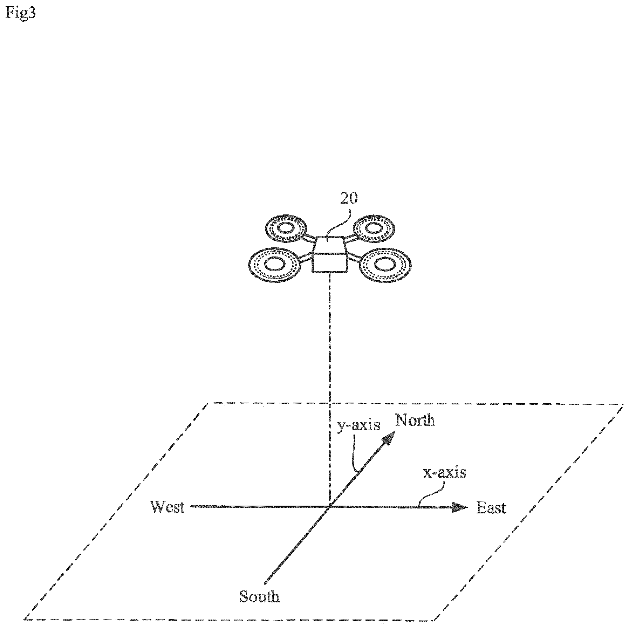

FIG. 3 is a diagram showing an example of a coordinate system used when calculating a propulsion speed and a propulsion direction. In the coordinate system shown in FIG. 3, the origin is a point where a perpendicular line that extends in the vertical direction from the center of the unmanned aerial vehicle 20 toward the ground surface intersects with the ground surface, an axis parallel to the east-west direction is set as the x axis, and an axis parallel to the north-south direction is set as the y axis. This coordinate system is a coordinate system in which the unmanned aerial vehicle 20 can be set as the center, and the origin point moves moment by moment following movement of the unmanned aerial vehicle 20.

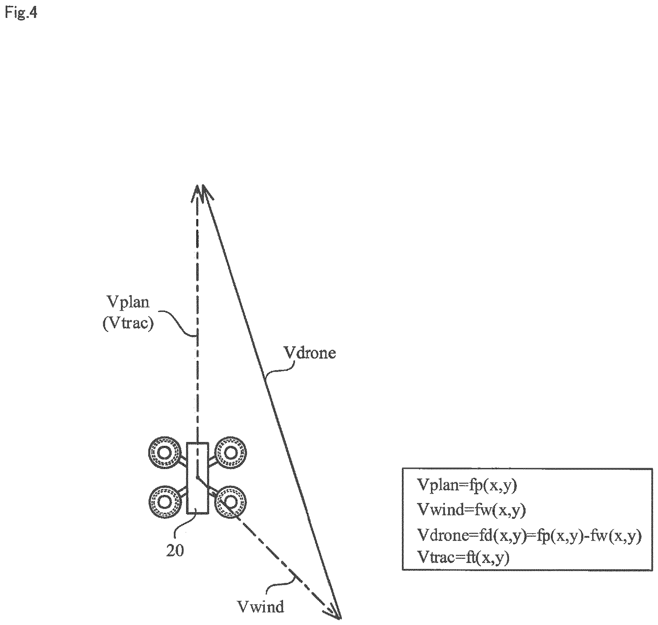

FIG. 4 is a diagram for illustrating an example of calculating the propulsion speed and the propulsion direction in a case where wind is blowing in a direction that intersects with the flight direction of the unmanned aerial vehicle 20 set in the route information acquired by the route information acquisition unit 11. In FIG. 4, a velocity vector that indicates the flight speed and the flight direction of the unmanned aerial vehicle 20 set in the route information acquired by the route information acquisition unit 11 is expressed as a velocity vector Vplan = fp (x, y), in which the above-described coordinate system is used. Also, a velocity vector that indicates the wind speed and the wind direction at the identification position of the unmanned aerial vehicle 20 that was calculated by the flight control unit 14 is expressed as a velocity vector Vwind = fw (x, y), in which the above-described coordinate system is used. Also, a velocity vector that indicates the propulsion speed and the propulsion direction of the unmanned aerial vehicle 20 that was calculated by the flight control unit 14 is expressed as a velocity vector Vdrone = fd (x, y), in which the above-described coordinate system is used. Furthermore, a velocity vector that indicates the flight speed and the flight direction of the unmanned aerial vehicle 20 in a case where the thrust of the thrust generation units 23 of the unmanned aerial vehicle 20 have been adjusted according to the velocity vector Vdrone is expressed as a velocity vector Vtrac = ft (x, y), in which the above-described coordinate system is used.

Referring to FIG. 4, in the present embodiment, the flight control unit 14 calculates the velocity vector Vdrone using the velocity vector Vplan and the velocity vector Vwind, such that the velocity vector Vtrac matches the velocity vector Vplan. Then, the flight control unit 14 transmits flight control information for flying the unmanned aerial vehicle 20 according to the velocity vector Vdrone that was calculated to the unmanned aerial vehicle 20 through the wireless communications unit 15. Thus, it is possible for the unmanned aerial vehicle 20 to fly with the flight route and the flight speed that have been set in advance, with the effects of the wind cancelled.

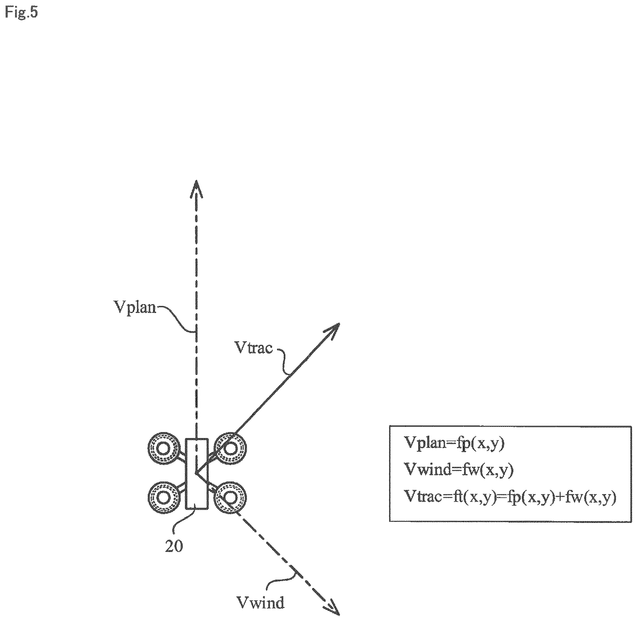

On the other hand, referring to FIG. 5, in a case where flight of the unmanned aerial vehicle 20 is controlled according to the velocity vector Vplan without considering the velocity vector Vwind, the effects of the wind cannot be cancelled, so it is not possible to match the velocity vector Vtrac to the velocity vector Vplan. Therefore, in a case where the unmanned aerial vehicle 20 is flown according to the flight route that has been set in advance, it is necessary to correct the position of the unmanned aerial vehicle 20 each time that the position of the unmanned aerial vehicle 20 deviates from the flight route that has been set in advance. In this case, the unmanned aerial vehicle 20 flies in a zigzag manner, which may interfere with work performed using the unmanned aerial vehicle 20.

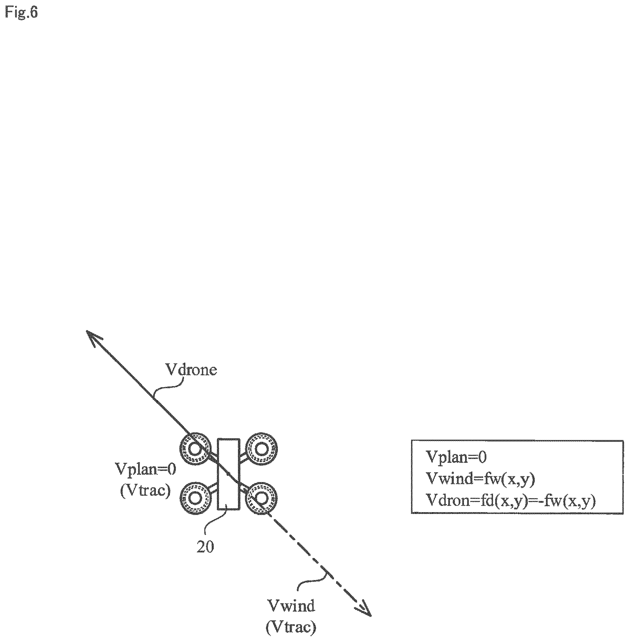

FIG. 6 is a diagram for illustrating an example of calculating the propulsion speed and the propulsion direction when causing the unmanned aerial vehicle 20 to hover.

Referring to FIG. 6, when causing the unmanned aerial vehicle 20 to hover, the flight control unit 14 calculates the velocity vector Vdrone using the velocity vector Vwind, such that the velocity vector Vtrac becomes zero. Then, the flight control unit 14 transmits flight control information for flying the unmanned aerial vehicle 20 according to the velocity vector Vdrone that was calculated to the unmanned aerial vehicle 20 through the wireless communications unit 15. Thus, it is possible for the unmanned aerial vehicle 20 to hover with the effects of the wind cancelled.

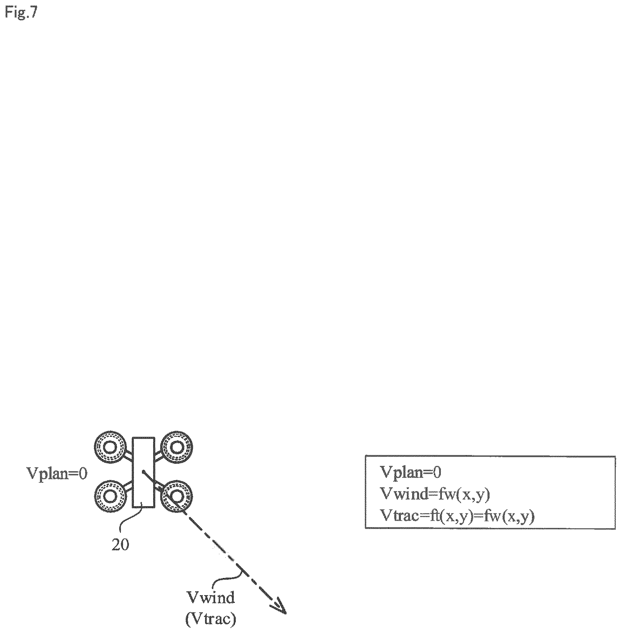

On the other hand, referring to FIG. 7, in a case where flight of the unmanned aerial vehicle 20 is controlled according to the velocity vector Vplan without considering the velocity vector Vwind, the effects of the wind cannot be cancelled, so it is not possible to set the velocity vector Vtrac to zero. In this case, it is necessary to correct the position of the unmanned aerial vehicle 20 each time that the position of the unmanned aerial vehicle 20 deviates from the hovering position that has been set in advance. Therefore, it is not possible to cause the unmanned aerial vehicle 20 to hover in a stable manner.

### [Device Operation]

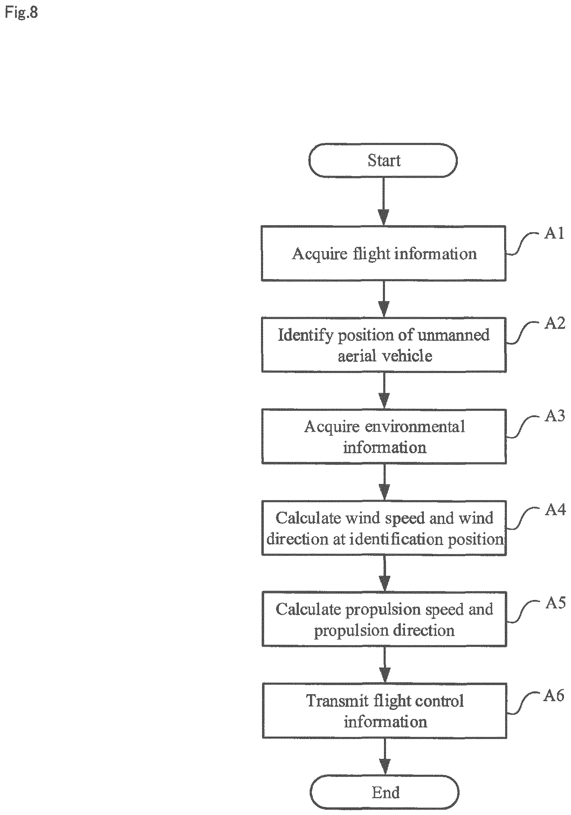

Next, operation of the flight control device 10 according to an embodiment of the present invention will be described with reference to FIG. 8. FIG. 8 is a flowchart showing operation of a flight control device according to an embodiment of the present invention. The following description will refer to FIGS. 1 to 7 as appropriate. Also, in the present embodiment, a flight control method is implemented by operating the flight control device 10. Therefore, the description of the flight control method in the present embodiment substitutes for the below description of operation of the flight control device 10.

As shown in FIG. 8, first, in the flight control device 10, the route information acquisition unit 11 acquires the route information that has been set in advance (Step A1). Next, the position identification unit 12 acquires the positional information from the unmanned aerial vehicle 20 or the plurality of detection devices 40, and identifies the position of the unmanned aerial vehicle 20 (Step A2). Also, the environmental information acquisition unit 13 acquires the environmental information (in the present embodiment, the wind speed and the wind direction) of the farm field 30 from the plurality of detection devices 40 (Step A3).

Next, the flight control unit 14, based on the positions of the plurality of detection devices 40 that have been identified in advance, and the wind speeds and the wind directions detected by the plurality of detection devices 40, calculates the wind speed and the wind direction at the position (the identification position) of the unmanned aerial vehicle 20 that was identified by the position identification unit 12 (Step A4). Note that in Step A4, the flight control unit 14 may also calculate the wind speed and the wind direction detected by the detection device 40 nearest to the identification position as the wind speed and the wind direction at the identification position.

Next, the flight control unit 14 calculates the propulsion speed and the propulsion direction of the unmanned aerial vehicle 20 based on the wind speed and the wind direction at the identification position of the unmanned aerial vehicle 20, and the route and the flight speed of the unmanned aerial vehicle 20 acquired by the route information acquisition unit 11 (Step A5). Lastly, the flight control unit 14 generates flight control information for flying the unmanned aerial vehicle 20 with the propulsion speed and the propulsion direction calculated, and transmits the generated flight control information to the unmanned aerial vehicle 20 (Step A6).

### [Program]

Regarding the program in the present embodiment, it is sufficient that the program causes a computer to execute Steps A1 to A6 shown in FIG. 8. By installing this program in the computer and executing the program, it is possible to realize the flight control device 10 and the flight control method in the present embodiment. In this case, a CPU (Central Processing Unit) of the computer performs processing to function as the route information acquisition unit 11, the position identification unit 12, the environmental information acquisition unit 13, the flight control unit 14, and the wireless communications unit 15.

Also, the program in the present embodiment may be executed by a computer system constructed from a plurality of computers. In this case, for example, each computer may function as any of the route information acquisition unit 11, the position identification unit 12, the environmental information acquisition unit 13, the flight control unit 14, and the wireless communications unit 15.

### [Modified Examples]

In the above embodiment, a case is described where a detection device 40 detects the wind speed and the wind direction, but the detection device 40 may also detect other environmental information, such as a rainfall amount.

In the above embodiment, a case is described where, in Step A5, the flight control unit 14 calculates the propulsion speed and the propulsion direction such that it is possible to cancel wind, but the processing of the flight control unit 14 is not limited to the above example. For example, a mode may also be adopted in which, in a case where the wind speed is greater than a threshold value that has been set in advance, the flight control unit 14 generates flight control information for elevating or landing the unmanned aerial vehicle 20, and transmits the generated flight control information to the unmanned aerial vehicle 20. In this case, it is possible to prevent the unmanned aerial vehicle 20 from crashing due to a gust of wind.

Also, a mode may be adopted in which the flight control unit 14, in order to maintain lift of the unmanned aerial vehicle 20, according to the wind speed and the wind direction, generates flight control information for controlling the altitude of the unmanned aerial vehicle 20 and controlling rotation speed of the rotors of the unmanned aerial vehicle 20, and transmits the generated flight control information to the unmanned aerial vehicle 20. Furthermore, a mode may be adopted in which the flight control unit 14, in order to maintain lift of the unmanned aerial vehicle 20, according to the wind speed and the wind direction, generates flight control information for controlling the flight attitude (tilt or the like) of the unmanned aerial vehicle 20, and transmits the generated flight control information to the unmanned aerial vehicle 20.

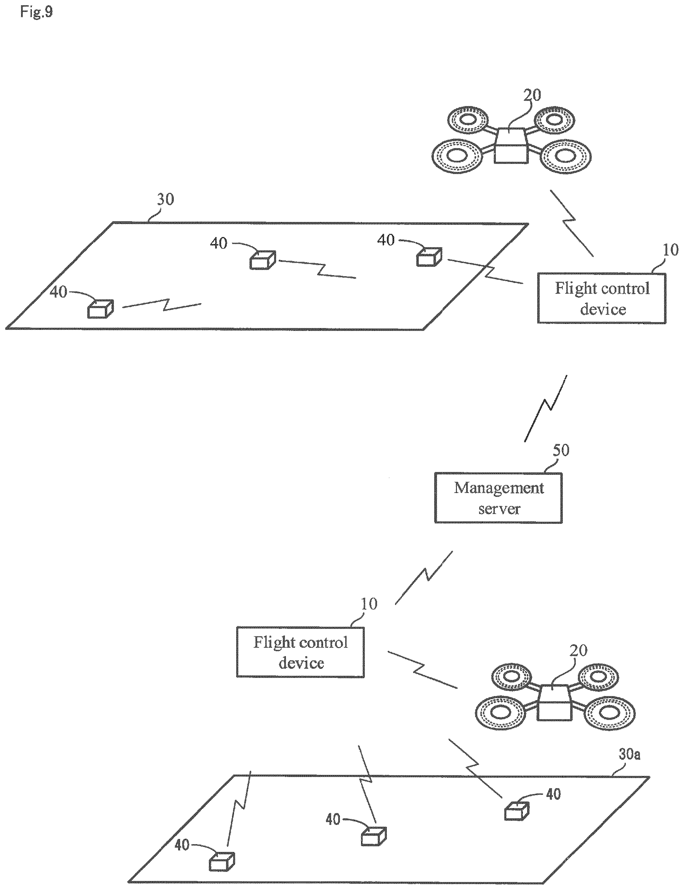

In the above embodiment, a case is described where the unmanned aerial vehicle 20 is controlled based on the environmental information of a single farm field 30, but for example, as shown in FIG. 9, environmental information may also be shared, through a management server 50, between a flight control device 10 used in a farm field 30 and another flight control device 10 used in a farm field 30a. In this case, a flight control device 10 can control flight of the unmanned aerial vehicle 20 by further considering the environmental information that has been supplied from the other flight control device 10 through the management server 50. Thus, for example, the flight control device 10, based on the environmental information of the other farm field, can predict an environment change (such as the occurrence of wind gusts) of the farm field where the unmanned aerial vehicle 20 controlled by that flight control device 10 will fly, and therefore it is possible to more appropriately control flight of the unmanned aerial vehicle 20.

In the above embodiment, positional information is output by both the unmanned aerial vehicle 20 and the plurality of detection devices 40, but a mode may also be adopted in which either the unmanned aerial vehicle 20 or the plurality of detection devices 40 output positional information.

In the example shown in FIGS. 1 and 2, the flight control device 10 is installed outside of the unmanned aerial vehicle 20. However, in the present embodiment, a mode may also be adopted in which the flight control device 10 is installed in the unmanned aerial vehicle 20. Also, in this mode, the program according to the present embodiment is installed in a computer installed in the unmanned aerial vehicle 20, and executed.

### [Physical Configuration]

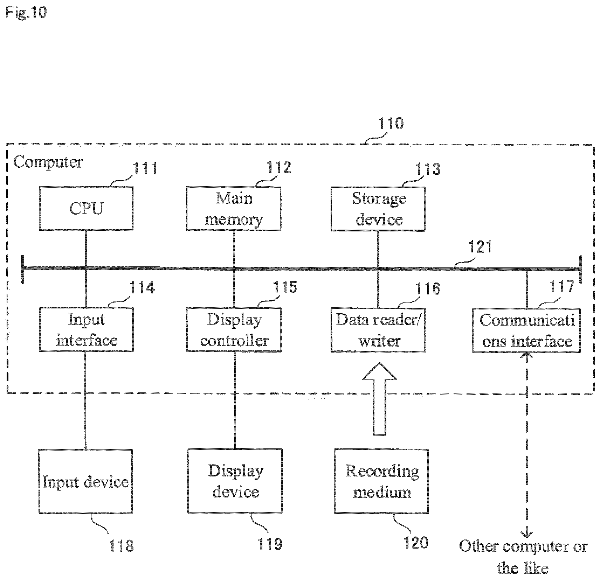

Here, a computer that realizes a flight control device by executing a program according to an embodiment will be described with reference to FIG. 10. FIG. 10 is a block diagram showing an example of a computer that realizes a flight control device 10 according to an embodiment of the present invention.

As shown in FIG. 10, a computer 110 includes a CPU 111, a main memory 112, a storage device 113, an input interface 114, a display controller 115, a data reader/writer 116, and a communications interface 117. These units are each connected through a bus 121 so as to be capable of performing data communications with each other.

The CPU 111 opens the program (code) according to the present embodiment, which is stored in the storage device 113, into the main memory 112 and executes the program in a predetermined order, thereby performing various operations. The main memory 112 is typically a volatile storage device such as a DRAM (Dynamic Random Access Memory). Also, the program according to the present embodiment is provided in a state stored on a computer-readable recording medium 120. Note that the program according to the present embodiment may be distributed on an internet connected through the communications interface 117.

Also, a specific example of the storage device 113 includes, other than a hard disk drive, a semiconductor storage device such as a flash memory. The input interface 114 mediates data transmission between the CPU 111 and an input device 118, for example a keyboard and a mouse. The display controller 115 is connected to a display device 119 and controls display on the display device 119.

The data reader/writer 116 mediates data transmission between the CPU 111 and the recording medium 120, reads the program from the recording medium 120, and writes processing results in the computer 110 to the recording medium 120. The communications interface 117 mediates data transmission between the CPU 111 and other computers.

Also, specific examples of the recording medium 120 include a general-purpose semiconductor storage device such as a CF (Compact Flash (registered trademark)) device and an SD (Secure Digital) device, a magnetic recording medium such as a flexible disk (Flexible Disk), an optical recording medium such as a CD-ROM (Compact Disk Read Only Memory), and the like.

Note that the flight control device 10 according to the present embodiment can be realized not only by a computer having a program installed, but also by using hardware corresponding to each part. Further, a mode may be adopted in which a portion of the flight control device 10 is realized by a program, and the remaining portions are realized by hardware.

Although the present invention is described above with reference to embodiments, the present invention is not limited by the above embodiments. Within the scope of the present invention, various modifications understandable by those skilled in the art can be made to the configurations or details of the present invention.

This application claims the benefit of Japanese Patent Application No. 2016-195106, filed September 30, 2016.

### INDUSTRIAL APPLICABILITY

As described above, according to the present invention, it is possible to control flight of a UAV according to changes in the environment of a farm field. Accordingly, the present invention is useful in various UAVs.

### DESCRIPTION OF REFERENCE SIGNS

- 10: Flight control device
- 11: Route information acquisition unit
- 12: Position identification unit
- 13: Environmental information acquisition unit
- 14: Flight control unit
- 15: Wireless communications unit
- 20: Unmanned aerial vehicle
- 21: Data processing unit
- 22: GPS signal receiving unit
- 23: Thrust generation unit
- 24: Wireless communications unit
- 25: Transmitter
- 30: Farm field
- 40: Detection device
- 50: Management server
- 110: Computer
- 111: CPU
- 112: Main memory
- 113: Storage device
- 114: Input interface
- 115: Display controller
- 116: Data reader/writer
- 117: Communications interface
- 118: Input device
- 119: Display device
- 120: Recording medium
- 121: Bus

## Claims

1. A flight control device (10) for controlling flight of an unmanned aerial vehicle (20) used in a farm field, the flight control device comprising:
a route information acquisition unit (11) configured to acquire, by setting in advance by a user via a user interface, route information related to a route of the unmanned aerial vehicle (20), the preset route information including i) a flight route, and ii) a flight direction and a flight speed at each point of the flight route;
a position identification unit (12) configured to identify a position of the unmanned aerial vehicle (20) based on positional information;
**characterized by**
an environmental information acquisition unit (13) configured to acquire as environmental information related to the environment of the farm field, a wind speed and a wind direction from each of a plurality of detection devices (40) that have been installed in a distributed manner in the farm field; and
a flight control unit (14) configured to control flight of the unmanned aerial vehicle (20) based on the acquired preset route information, the identified position of the unmanned aerial vehicle (20), and the acquired environmental information,
wherein:
the flight control unit (14) is configured to
calculate, based on the position of each of the detection devices (40), the wind speed and the wind direction that are detected by each of the detection devices (40), and the identified position of the unmanned aerial vehicle (20), a wind speed and a wind direction at the identified position of the unmanned aerial vehicle (20),
calculate, based on the calculated wind speed and the calculated wind direction, and the flight speed and the flight direction, set in the acquired preset route information, with respect to the identified position of the unmanned aerial vehicle (20), a propulsion speed and a propulsion direction, and calculate a vector (Vdrone) representing the calculated propulsion speed and the calculated propulsion direction equal to a vector (Vplan) representing
the flight speed and the flight direction at the identified position of the unmanned aerial vehicle (20) minus a vector (Vwind) representing the calculated wind speed and the calculated wind direction, generate flight control information for flying the unmanned aerial vehicle (20), at the identified position of the unmanned aerial vehicle (20), according to the calculated velocity vector (Vdrone), and
transmit the generated flight control information to the unmanned aerial vehicle (20).

2. The flight control device according to claim 1,
wherein the unmanned aerial vehicle (20) includes a function to receive a Global Positioning System (GPS) signal and transmit information based on the GPS signal as the positional information to the flight control device (10), and also transmit a radio wave for identifying the position of the unmanned aerial vehicle (20),
each of the detection devices (40) includes a function to receive the radio wave that was transmitted from the unmanned aerial vehicle (20) and transmit information that identifies a strength of the received radio wave as the positional information to the flight control device (10), and
the position identification unit (12) is configured to identify the position of the unmanned aerial vehicle (20) based on one of the positional information that was transmitted from the unmanned aerial vehicle (20) and the positional information that was transmitted from each of the detection devices (40).

3. The flight control device according to claim 1 or 2,
wherein the environmental information acquisition unit (13) is further configured to acquire environmental information of another farm field that was detected by a detection device installed in the other farm field, and
the flight control unit (14) is configured to control flight of the unmanned aerial vehicle (20) based on the environmental information of the other farm field acquired by the environmental information acquisition unit (13).

4. A flight control method for controlling flight of an unmanned aerial vehicle (20) used in a farm field, the flight control method comprising:
(a) a step of acquiring, by setting in advance by a user via a user interface, route information related to a route of the unmanned aerial vehicle (20), the preset route information including i) a flight route, and ii) a flight direction and a flight speed at each point of the flight route;
(b) a step of identifying a position of the unmanned aerial vehicle (20) based on positional information;
**characterized by**
(c) a step of acquiring, as environmental information related to the environment of the farm field, a wind speed and a wind direction from a plurality of detection devices (40) that have been installed in a distributed manner in the farm field; and
(d) a step of controlling flight of the unmanned aerial vehicle (20) based on the preset route information acquired in the step (a), the position of the unmanned aerial vehicle (20) identified in the step (b), and the environmental information acquired in the step (c),
wherein the step (d) comprises:
calculating, based on the position of each of the detection devices (40), the wind speed and the wind direction that are detected by each of the detection devices (40), and the position of the unmanned aerial vehicle (20) identified in the step (b), a wind speed and a wind direction at the identified position of the unmanned aerial vehicle (20), and
calculating, based on the calculated wind speed and the calculated wind direction, and the flight speed and the flight direction, set in the acquired preset route information, with respect to the identified position of the unmanned aerial vehicle (20), a propulsion speed and a propulsion direction, and calculate a vector (Vdrone) representing the calculated propulsion speed and the calculated propulsion direction equal to a vector (Vplan) representing the flight speed and the flight direction at the identified position of the unmanned aerial vehicle (20) minus a vector (Vwind) representing the calculated wind speed and the calculated wind direction,
generating flight control information for flying the unmanned aerial vehicle (20), at the identified position of the unmanned aerial vehicle (20), according to the calculated velocity vector (Vdrone), and
transmitting the generated flight control information to the unmanned aerial vehicle (20).

5. The flight control method according to claim 4,
wherein the unmanned aerial vehicle (20) includes a function to receive a GPS signal and transmit information based on the GPS signal as the positional information to the flight control device, and also transmit a radio wave for identifying the position of the unmanned aerial vehicle (20),
each of the detection devices (40) includes a function to receive the radio wave that was transmitted from the unmanned aerial vehicle (20) and transmit information that identifies a strength of the received radio wave as the positional information to the flight control device, and
in the step (b), the position of the unmanned aerial vehicle (20) is identified based on one of the positional information that was transmitted from the unmanned aerial vehicle (20) and the positional information that was transmitted from each of the detection devices (40).

6. The flight control method according to claim 4 or 5,
wherein in the step (c), environmental information of another farm field that was detected by a detection device (40) installed in the other farm field is further acquired, and
in the step (d), flight of the unmanned aerial vehicle (20) is controlled based on the environmental information of the other farm field acquired in the step (c).

7. A computer program comprising instructions which, when the program is executed by a computer, cause the computer to execute the method of any of claims 4 to 6.

8. An unmanned aerial vehicle (20) comprising the flight control device (10) according to any one of claims 1 to 3.

9. A system comprising an unmanned aerial vehicle (20) according to claim 8 and a plurality of detection devices (40).

## Patentansprüche

1. Flugsteuerungsvorrichtung (10) zum Steuern eines Flugs eines in einem Landwirtschaftsfeld verwendeten unbemannten Luftfahrzeugs (20), wobei die Flugsteuerungsvorrichtung folgendes umfasst:
eine Routeninformationserlangungseinheit (11), die konfiguriert ist, um durch Einstellen im Voraus durch einen Benutzer über eine Benutzerschnittstelle Routeninformation in Bezug auf eine Route des unbemannten Luftfahrzeugs (20) zu erlangen, wobei die voreingestellte Routeninformation i) eine Flugroute und ii) eine Flugrichtung und eine Fluggeschwindigkeit an jedem Punkt der Flugroute enthält;
eine Positionsidentifikationseinheit (12), die konfiguriert ist, um eine Position des unbemannten Luftfahrzeugs (20) basierend auf Positionsinformation zu identifizieren;
**gekennzeichnet durch**
eine Umweltinformationserlangungseinheit (13), die konfiguriert ist, um als Umweltinformation in Bezug auf die Umwelt des Landwirtschaftsfelds eine Windgeschwindigkeit und eine Windrichtung von jeder einer Vielzahl von Detektionsvorrichtungen (40) zu erlangen, die auf eine verteilte Weise in dem Landwirtschaftsfeld installiert worden sind; und
eine Flugsteuerungseinheit (14), die konfiguriert ist, um einen Flug des unbemannten Luftfahrzeugs (20) basierend auf der erlangten voreingestellten Routeninformation, der identifizierten Position des unbemannten Luftfahrzeugs (20) und der erlangten Umweltinformation zu steuern,
wobei:
die Flugsteuerungseinheit (14) konfiguriert ist, um
basierend auf der Position von jeder der Detektionsvorrichtungen (40) der Windgeschwindigkeit und der Windrichtung, die durch jede der Detektionsvorrichtungen (40) detektiert werden, und der identifizierten Position des unbemannten Luftfahrzeugs (20) eine Windgeschwindigkeit und eine Windrichtung bei der identifizierten Position des unbemannten Luftfahrzeugs (20) zu berechnen,
basierend auf der berechneten Windgeschwindigkeit und der berechneten Windrichtung, und der Fluggeschwindigkeit und der Flugrichtung, die in der erlangten voreingestellten Routeninformation eingestellt sind, in Bezug auf die identifizierte Position des unbemannten Luftfahrzeugs (20), eine Antriebsgeschwindigkeit und eine Antriebsrichtung zu berechnen, und einen Vektor (Vdrone), der die berechnete Antriebsgeschwindigkeit und die berechnete Antriebsrichtung darstellt, gleich einem Vektor (Vplan), der die Fluggeschwindigkeit und die Flugrichtung bei der identifizierten Position des unbemannten Luftfahrzeugs (20) darstellt, minus einem Vektor (Vwind), der die berechnete Windgeschwindigkeit und die berechnete Windrichtung darstellt, zu berechnen,
Flugsteuerungsinformation zum Fliegen des unbemannten Luftfahrzeugs (20) bei der identifizierten Position des unbemannten Luftfahrzeugs (20) gemäß dem berechneten Geschwindigkeitsvektor (Vdrone) zu erzeugen, und
die erzeugte Flugsteuerungsinformation zu dem unbemannten Luftfahrzeug (20) zu übertragen.

2. Flugsteuerungsvorrichtung nach Anspruch 1,
wobei das unbemannte Luftfahrzeug (20) eine Funktion enthält, um ein Signal eines globalen Positionierungssystems (GPS) zu empfangen und Information basierend auf dem GPS-Signal als die Positionsinformation zu der Flugsteuerungsvorrichtung (10) zu übertragen und auch eine Funkwelle zum Identifizieren der Position des unbemannten Luftfahrzeugs (20) zu übertragen,
jede der Detektionsvorrichtungen (40) eine Funktion enthält, um die Funkwelle, die von dem unbemannten Luftfahrzeug (20) übertragen wurde, zu empfangen und Information, die eine Stärke der empfangenen Funkwelle identifiziert, als die Positionsinformation zu der Flugsteuerungsvorrichtung (10) zu übertragen; und
die Positionsidentifikationseinheit (12) konfiguriert ist, um die Position des unbemannten Luftfahrzeugs (20) basierend auf einer der Positionsinformation, die von dem unbemannten Luftfahrzeug (20) übertragen wurde, und der Positionsinformation, die von jeder der Detektionsvorrichtungen (40) übertragen wurde, zu identifizieren.

3. Flugsteuerungsvorrichtung nach Anspruch 1 oder 2,
wobei die Umweltinformationserlangungseinheit (13) weiterhin konfiguriert ist, um Umweltinformation eines anderen Landwirtschaftsfelds zu erlangen, die durch eine in dem anderen Landwirtschaftsfeld installierte Detektionsvorrichtung detektiert wurde, und
die Flugsteuerungseinheit (14) konfiguriert ist, um einen Flug des unbemannten Luftfahrzeugs (20) basierend auf der durch die Umweltinformationserlangungseinheit (13) erlangten Umweltinformation des anderen Landwirtschaftsfelds zu steuern.

4. Flugsteuerungsverfahren zum Steuern eines Flugs eines in einem Landwirtschaftsfeld verwendeten unbemannten Luftfahrzeugs (20), wobei das Flugsteuerungsverfahren folgendes umfasst:
(a) einen Schritt zum Erlangen, durch Einstellen im Voraus durch einen Benutzer über eine Benutzerschnittstelle, von Routeninformation in Bezug auf eine Route des unbemannten Luftfahrzeugs (20), wobei die voreingestellte Routeninformation i) eine Flugroute und ii) eine Flugrichtung und eine Fluggeschwindigkeit an jedem Punkt der Flugroute enthält;
(b) einen Schritt zum Identifizieren einer Position des unbemannten Luftfahrzeugs (20) basierend auf Positionsinformation;
**gekennzeichnet durch**
(c) einen Schritt zum Erlangen, als Umweltinformation in Bezug auf die Umwelt des Landwirtschaftsfelds, einer Windgeschwindigkeit und einer Windrichtung von einer Vielzahl von Detektionsvorrichtungen (40), die auf eine verteilte Weise in dem Landwirtschaftsfeld installiert worden sind; und
(d) einen Schritt zum Steuern eines Flugs des unbemannten Luftfahrzeugs (20) basierend auf der im Schritt (a) erlangten voreingestellten Routeninformation, der im Schritt (b) identifizierten Position des unbemannten Luftfahrzeugs (20) und der im Schritt (c) erlangten Umweltinformation,
wobei der Schritt (d) folgendes umfasst:
Berechnen, basierend auf der Position von jeder der Detektionsvorrichtungen (40), der Windgeschwindigkeit und der Windrichtung, die durch jede der Detektionsvorrichtungen (40) erfasst werden, und der im Schritt (b) identifizierten Position des unbemannten Luftfahrzeugs (20), einer Windgeschwindigkeit und einer Windrichtung bei der identifizierten Position des unbemannten Luftfahrzeugs (20), und
Berechnen, basierend auf der berechneten Windgeschwindigkeit und der berechneten Windrichtung, und der Fluggeschwindigkeit und der Flugrichtung, die in der erlangten voreingestellten Routeninformation eingestellt sind, in Bezug auf die identifizierte Position des unbemannten Luftfahrzeugs (20), einer Antriebsgeschwindigkeit und einer Antriebsrichtung und
Berechnen eines Vektors (Vdrone), der die berechnete Antriebsgeschwindigkeit und die berechnete Antriebsrichtung darstellt, gleich einem Vektor (Vplan), der die Fluggeschwindigkeit und die Flugrichtung bei der identifizierten Position des unbemannten Luftfahrzeugs (20) darstellt, minus einem Vektor (Vwind), der die berechnete Windgeschwindigkeit und die berechnete Windrichtung darstellt,
Erzeugen von Flugsteuerungsinformation zum Fliegen des unbemannten Luftfahrzeugs (20) bei der identifizierten Position des unbemannten Luftfahrzeugs (20) gemäß dem berechneten Geschwindigkeitsvektor (Vdrone), und
Übertragen der erzeugten Flugsteuerungsinformation zu dem unbemannten Luftfahrzeug (20).

5. Flugsteuerungsverfahren nach Anspruch 4,
wobei das unbemannte Luftfahrzeug (20) eine Funktion enthält, um ein GPS-Signal zu empfangen und Information basierend auf dem GPS-Signal als Positionsinformation zu der Flugsteuerungsvorrichtung zu übertragen, und auch eine Funkwelle zum Identifizieren der Position des unbemannten Luftfahrzeugs (20) zu übertragen,
jede der Detektionsvorrichtungen (40) eine Funktion enthält, um die Funkwelle, die von dem unbemannten Luftfahrzeug (20) übertragen wurde, zu empfangen, und Information, die eine Stärke der empfangenen Funkwelle identifiziert, als die Positionsinformation zu der Flugsteuerungsvorrichtung zu übertragen, und
im Schritt (b) die Position des unbemannten Luftfahrzeugs (20) basierend auf einer der Positionsinformation, die von dem unbemannten Luftfahrzeug (20) übertragen wurde, und der Positionsinformationen, die von jeder der Detektionsvorrichtungen (40) übertragen wurde, identifiziert wird.

6. Flugsteuerungsverfahren nach Anspruch 4 oder 5,
wobei im Schritt (c) weiterhin Umweltinformation eines anderen Landwirtschaftsfelds, die durch eine in dem anderen Landwirtschaftsfeld installierte Detektionsvorrichtung (40) detektiert wurde, erlangt wird, und
im Schritt (d) ein Flug des unbemannten Luftfahrzeugs (20) basierend auf der im Schritt (c) erlangten Umweltinformation des anderen Landwirtschaftsfelds gesteuert wird.

7. Computerprogramm, das Anweisungen enthält, die dann, wenn das Programm durch einen Computer ausgeführt wird, veranlassen, dass der Computer das Verfahren nach einem der Ansprüche 4 bis 6 ausführt.

8. Unbemanntes Luftfahrzeug (20), das die Flugsteuerungsvorrichtung (10) nach einem der Ansprüche 1 bis 3 umfasst.

9. System, das ein unbemanntes Luftfahrzeug (20) nach Anspruch 8 und eine Vielzahl von Detektionsvorrichtungen (40) umfasst.

## Revendications

1. Dispositif de commande de vol (10) pour commander le vol d'un véhicule aérien sans pilote (20) utilisé dans un champ agricole, le dispositif de commande de vol comprenant :
une unité d'acquisition d'informations d'itinéraire (11) configurée pour acquérir, en définissant à l'avance par un utilisateur via une interface utilisateur, des informations d'itinéraire liées à un itinéraire du véhicule aérien sans pilote (20), les informations d'itinéraire prédéfinies comprenant i) un itinéraire de vol, et ii) une direction de vol et une vitesse de vol à chaque point de l'itinéraire de vol ;
une unité d'identification de position (12) configurée pour identifier une position du véhicule aérien sans pilote (20) sur la base d'informations de position ;
**caractérisé par**
une unité d'acquisition d'informations environnementales (13) configurée pour acquérir en tant qu'informations environnementales liées à l'environnement du champ agricole, une vitesse du vent et une direction du vent à partir de chacun d'une pluralité de dispositifs de détection (40) qui ont été installés d'une manière distribuée dans le champ agricole ; et
une unité de commande de vol (14) configurée pour commander le vol du véhicule aérien sans pilote (20) sur la base des informations d'itinéraire prédéfinies acquises, de la position identifiée du véhicule aérien sans pilote (20), et des informations environnementales acquises,
dans lequel :
l'unité de commande de vol (14) est configurée pour
calculer, sur la base de la position de chacun des dispositifs de détection (40), la vitesse du vent et la direction du vent qui sont détectées par chacun des dispositifs de détection (40), et de la position identifiée du véhicule aérien sans pilote (20), une vitesse du vent et une direction du vent à la position identifiée du véhicule aérien sans pilote (20),
calculer, sur la base de la vitesse du vent calculée et de la direction du vent calculée, et de la vitesse de vol et de la direction de vol, définies dans les informations d'itinéraire prédéfinies acquises, par rapport à la position identifiée du véhicule aérien sans pilote (20), une vitesse de propulsion et une direction de propulsion, et calculer un vecteur (Vdrone) représentant la vitesse de propulsion calculée et la direction de propulsion calculée égal à un vecteur (Vplan) représentant la vitesse de vol et la direction de vol à la position identifiée du véhicule aérien sans pilote (20) moins un vecteur (Vwind) représentant la vitesse du vent calculée et la direction du vent calculée,
générer des informations de commande de vol pour faire voler le véhicule aérien sans pilote (20), à la position identifiée du véhicule aérien sans pilote (20), selon le vecteur (Vdrone) de vélocité calculé,
et
transmettre les informations de commande de vol générées au véhicule aérien sans pilote (20).

2. Dispositif de commande de vol selon la revendication 1,
dans lequel le véhicule aérien sans pilote (20) comprend une fonction pour recevoir un signal de système mondial de localisation (GPS) et transmettre des informations sur la base du signal GPS en tant qu'informations de position au dispositif de commande de vol (10), et également transmettre une onde radio pour identifier la position du véhicule aérien sans pilote (20),
chacun des dispositifs de détection (40) comprend une fonction pour recevoir l'onde radio qui a été transmise à partir du véhicule aérien sans pilote (20) et transmettre des informations qui identifient une intensité de l'onde radio reçue en tant qu'informations de position au dispositif de commande de vol (10), et
l'unité d'identification de position (12) est configurée pour identifier la position du véhicule aérien sans pilote (20) sur la base d'une parmi les informations de position qui ont été transmises à partir du véhicule aérien sans pilote (20) et les informations de position qui ont été transmises à partir de chacun des dispositifs de détection (40).

3. Dispositif de commande de vol selon la revendication 1 ou 2,
dans lequel l'unité d'acquisition d'informations environnementales (13) est en outre configurée pour acquérir des informations environnementales d'un autre champ agricole qui ont été détectées par un dispositif de détection installé dans l'autre champ agricole, et
l'unité de commande de vol (14) est configurée pour commander le vol du véhicule aérien sans pilote (20) sur la base des informations environnementales de l'autre champ agricole acquises par l'unité d'acquisition d'informations environnementales (13).

4. Procédé de commande de vol pour commander le vol d'un véhicule aérien sans pilote (20) utilisé dans un champ agricole, le procédé de commande de vol comprenant :
(a) une étape consistant à acquérir, en définissant à l'avance par un utilisateur via une interface utilisateur, des informations d'itinéraire liées à un itinéraire du véhicule aérien sans pilote (20), les informations d'itinéraire prédéfinies comprenant i) un itinéraire de vol, et ii) une direction de vol et une vitesse de vol à chaque point de l'itinéraire de vol ;
(b) une étape consistant à identifier une position du véhicule aérien sans pilote (20) sur la base d'informations de position ;
**caractérisé par**
(c) une étape consistant à acquérir, en tant qu'informations environnementales liées à l'environnement du champ agricole, une vitesse du vent et une direction du vent à partir d'une pluralité de dispositifs de détection (40) qui ont été installés d'une manière distribuée dans le champ agricole ; et
(d) une étape consistant à commander le vol du véhicule aérien sans pilote (20) sur la base des informations d'itinéraire prédéfinies acquises à l'étape (a), de la position du véhicule aérien sans pilote (20) identifiée à l'étape (b), et des informations environnementales acquises à l'étape (c),
dans lequel l'étape (d) comprend :
le calcul, sur la base de la position de chacun des dispositifs de détection (40), de la vitesse du vent et de la direction du vent qui sont détectées par chacun des dispositifs de détection (40), et de la position du véhicule aérien sans pilote (20) identifiée à l'étape (b), d'une vitesse du vent et d'une direction du vent à la position identifiée du véhicule aérien sans pilote (20), et
le calcul, sur la base de la vitesse du vent calculée et de la direction du vent calculée, et de la vitesse de vol et de la direction de vol, définies dans les informations d'itinéraire prédéfinies acquises, par rapport à la position identifiée du véhicule aérien sans pilote (20), d'une vitesse de propulsion et d'une direction de propulsion, et le calcul d'un vecteur (Vdrone) représentant la vitesse de propulsion calculée et la direction de propulsion calculée égal à un vecteur (Vplan) représentant la vitesse de vol et la direction de vol à la position identifiée du véhicule aérien sans pilote (20) moins un vecteur (Vwind) représentant la vitesse du vent calculée et la direction du vent calculée,
la génération d'informations de commande de vol pour faire voler le véhicule aérien sans pilote (20), à la position identifiée du véhicule aérien sans pilote (20), selon le vecteur (Vdrone) de vélocité calculé,
et
la transmission des informations de commande de vol générées au véhicule aérien sans pilote (20).

5. Procédé de commande de vol selon la revendication 4,
dans lequel le véhicule aérien sans pilote (20) comprend une fonction pour recevoir un signal GPS et transmettre des informations sur la base du signal GPS en tant qu'informations de position au dispositif de commande de vol, et également transmettre une onde radio pour identifier la position du véhicule aérien sans pilote (20),
chacun des dispositifs de détection (40) comprend une fonction pour recevoir l'onde radio qui a été transmise à partir du véhicule aérien sans pilote (20) et transmettre des informations qui identifient une intensité de l'onde radio reçue en tant qu'informations de position au dispositif de commande de vol, et
à l'étape (b), la position du véhicule aérien sans pilote (20) est identifiée sur la base d'une parmi les informations de position qui ont été transmises à partir du véhicule aérien sans pilote (20) et les informations de position qui ont été transmises à partir de chacun des dispositifs de détection (40).

6. Procédé de commande de vol selon la revendication 4 ou 5,
dans lequel à l'étape (c), des informations environnementales d'un autre champ agricole qui ont été détectées par un dispositif de détection (40) installé dans l'autre champ agricole sont en outre acquises, et
à l'étape (d), le vol du véhicule aérien sans pilote (20) est commandé sur la base des informations environnementales de l'autre champ agricole acquises à l'étape (c).

7. Programme d'ordinateur comprenant des instructions qui, lorsque le programme est exécuté par un ordinateur, amènent l'ordinateur à exécuter le procédé selon l'une quelconque des revendications 4 à 6.

8. Véhicule aérien sans pilote (20) comprenant le dispositif de commande de vol (10) selon l'une quelconque des revendications 1 à 3.

9. Système comprenant un véhicule aérien sans pilote (20) selon la revendication 8 et une pluralité de dispositifs de détection (40).
